# EUROPEAN PATENT APPLICATION

(11) **EP 1 339 208 A1**
(43) Date of publication of application: **27.08.2003**
(21) Application number: 00978079.2
(22) Date of filing: 01.12.2000
(51) Int. Cl.: H04M 3/56, H04M 11/00, H04N 7/15

(54) **TELECONFERENCING SYSTEM**

(71) Applicant: Ginganet Corporation, Osaka-shi, Osaka 550-0012 (JP)
(72) Inventor: SUDO, Satoru, Ginganet Corporation, Osaka-shi, Osaka 550-0012 (JP)
(74) Representative: Schubert, Siegmar, Dipl.-Ing.
(86) International application number: JP0008550
(87) International publication number: WO02045398

(57) **Abstract**

The present invention provides a teleconferencing system that can prevent connection errors between teleconferencing terminals and a communication control device and can optimize utilization of the communication control device, and can set and change the conference conditions with the teleconferencing terminal. The teleconferencing terminal is provided with information regarding a first connection destination number, and conference participants are provided with respective ID numbers and passwords. Information regarding a conference request, and the respective ID numbers and passwords of the conference participants are recorded in the receiving terminal at a time of reserving a conference. At the time of accepting a conference request, the teleconferencing terminals establish a connection to the receiving terminal via the communication lines with the first connection destination number and transmits information regarding the ID numbers and the passwords. The receiving terminal determines a second connection destination number according to verification results of the ID numbers and the passwords, and transmits information regarding the second connection destination number. The teleconferencing terminals establish a connection to the communication control device via the communication lines with the second connection destination number.

## Description

### Technical Field

The present invention relates to a teleconferencing system including a plurality of teleconferencing terminals, a communication control device for multipoint communications connected between these plurality of teleconferencing terminals via communication lines, a receiving terminal that is connected to the teleconferencing terminals via communication lines and accepts a conference request.

### Background Art

An example of a conventional teleconferencing system includes a plurality of teleconferencing terminals and a communication control device for multipoint communications connected between these plurality of teleconferencing terminals via communication lines.

An example of this teleconferencing terminal includes a television used as a video information display portion and audio information output portion, a TV camera used as a video information capturing portion, a microphone used as an audio information capturing portion, a keyboard used as a character information input portion, and a signal control portion such as a multiplexer for controlling input and output of signals between each portion and the communication line. Another example of the teleconferencing terminal is a personal computer having a built-in modem that includes a display portion, a speaker, a camera, a microphone and a keyboard.

Examples of the communication lines include ISDN (Integrated Service Digital Network) line, a LAN (Local Area Network) line, and a high-speed digital dedicated line.

An example of the communication control device for multipoint communications is an MCU (Multipoint Control Unit), and the conference conditions are set by a control terminal (e.g., a personal computer) in advance at the time of installation.

In order to hold a teleconference utilizing the teleconferencing system, first, a request for a conference is made. In this case, a person that intends to participate in a conference (hereinafter, referred to simply as "conference participant") using one of the plurality of teleconferencing terminals makes a request for a conference to an operator that receives a conference request with a telephone. Then, the operator replies that the conference request is accepted to the conference participant and also supplies a connection destination number such as a telephone number to be used to hold a conference. Thereafter, this conference participant memorizes the connection destination number, for example, by taking a note and also supplies this connection destination number to other conference participants before the opening of the conference.

Then, at the time of holding the conference, all the conference participants establish a connection between the teleconferencing terminals and the communication control device via the communication lines with the connection destination number, and thus the teleconference is held while the connection is established.

However, in the conventional teleconferencing system, when a conference request is made, since a connection destination number that is to be used to hold a conference is supplied from an operator to one conference participant, some errors occur. For example, the operator may supply a wrong connection destination number to the conference participant; the conference participant may hear the number incorrectly (or see it incorrectly); the conference participant may take a note incorrectly; the number may be supplied or heard incorrectly between the conference participants; or some conference participants may take a note incorrectly. In addition, at the opening of the conference, the conference participant may use a wrong connection destination number, and cannot be connected to the communication control device.

The connection destination number to be used for connection to an MCU to hold a conference is determined as a result of assigning an MCU to a conference, that is, a determination as to which MCU should be used for which conference of the conferences that have been requested. That is to say, this system configuration is such that after a conference destination number is supplied from the operator to the conference participant, the assignment of the conference to the MCU cannot be changed. This causes a problem in that the MCU cannot be used to the optimal extent that the number of idle lines of the MCU is as small as possible. More specifically, when one MCU can control communications for 100 lines, that is, can be connected to 100 teleconferencing terminals, assignment of the MCUs to conferences can be performed as follows: if a conference using 50 teleconferencing terminals, a conference using 45 teleconferencing terminals, a conference using 30 teleconferencing terminals, a conference using 20 teleconferencing terminals, and a conference using 55 teleconferencing terminals are requested sequentially in this order, the conference using 50 teleconferencing terminals and the conference using 45 teleconferencing terminals are assigned to a first MCU, the conference using 30 teleconferencing terminals and the conference using 20 teleconferencing terminals are assigned to a second MCU, and the conference using 55 teleconferencing terminals is assigned to a third MCU. This means that there are 5 idle lines in the first MCU, 50 idle lines in the second MCU and 45 idle lines in the third MCU. Thus, the MCUs cannot be used efficiently.

The present invention has been achieved to solve these problems, and is directed to providing a teleconferencing system that can prevent connection errors between the teleconferencing terminals and the communication control device due to a wrong number for a connection destination and can optimize utilization of the communication control device, and that can set and change the conference conditions easily with a teleconferencing terminal.

### Disclosure of Invention

A teleconferencing system of claim 1 of the present invention includes a plurality of teleconferencing terminals, a communication control device for multipoint communications that connects between the plurality of teleconferencing terminals via communication lines, and a receiving terminal that is connected to the teleconferencing terminals via communication lines and accepts a conference request. Each of the teleconferencing terminals is provided with information regarding a first connection destination number to be used to establish a connection to the receiving terminal, and conference participants who participate in a teleconference with the teleconferencing terminals are provided with respective ID (identification) numbers and passwords. Information regarding a conference request, and the respective ID numbers and passwords of the plurality of conference participants who participate in the conference are recorded in the receiving terminal at a time of reserving a conference. At the time of accepting a conference request, each teleconferencing terminal establishes a connection to the receiving terminal via the communication line with the first connection destination number and transmits information regarding the ID numbers and the passwords of the conference participants input by the conference participants; the receiving terminal verifies the transmitted ID numbers and passwords by comparing them with the ID numbers and the passwords that are recorded at the time of reserving the conference, determines a second connection destination number to be used to hold a conference according to the verification results, and transmits information regarding the second connection destination number; the teleconferencing terminals record the transmitted information regarding the second connection destination number. At the time of holding the conference, each teleconferencing terminal establishes a connection to the communication control device via the communication line with the second connection destination number.

A teleconferencing system of claim 2 of the present invention includes a plurality of teleconferencing terminals, a communication control device for multipoint communications that connects between the plurality of teleconferencing terminals via communication lines, and a receiving terminal that is connected to the teleconferencing terminals via communication lines and accepts a conference request. Each of the teleconferencing terminals is provided with information regarding a first connection destination number to be used to establish a connection to the receiving terminal, and conference participants who participate in a teleconference with the teleconferencing terminals are provided with respective ID numbers and passwords. Information regarding a conference request, a conference condition, and the respective ID numbers and passwords of the plurality of conference participants who participate in the conference are recorded in the receiving terminal at a time of reserving a conference. At the time of accepting a conference request, each teleconferencing terminal establishes a connection to the receiving terminal via the communication line with the first connection destination number and transmits information regarding the ID numbers and the passwords of the conference participants input by the conference participants; the receiving terminal verifies the transmitted ID numbers and passwords by comparing them with the ID numbers and the passwords that are recorded at the time of reserving the conference, determines a second connection destination number to be used to hold a conference according to the verification results, and transmits information regarding the second connection destination number; the teleconferencing terminals record the transmitted information regarding the second connection destination number. At the time of holding the conference, each teleconferencing terminal establishes a connection to the communication control device via the communication lines with the second connection destination number.

In the teleconferencing system of claim 3 of the present invention, at the time of accepting the conference, the receiving terminal transmits information regarding the second connection destination number and information regarding the recorded conference condition to at least one of the plurality of teleconferencing terminals that particulate in a same conference; the one teleconferencing terminal records the transmitted information regarding the second connection destination number and the information regarding the conference condition; at the time of holding the conference, the one teleconferencing terminal establishes a connection to the communication via the communication line with the second connection destination number and transmits the information regarding the conference condition to the communication control device; and in response to this transmission, the communication control device sets the conference condition.

In the teleconferencing system of claim 4, at the time of accepting the conference, the receiving terminal verifies the transmitted ID numbers and passwords by comparing them with the ID numbers and the passwords that are recorded at the time of reserving the conference, establishes a connection to the communication control device and transmits information regarding the recorded conference condition to the communication control device; in response to this transmission, the communication control device sets the conference condition, and then transmits information regarding setting completion to the receiving terminal; and in response to this transmission, the receiving terminal transmits information regarding the second connection destination number to the teleconference terminals.

A teleconferencing system of claim 5 of the present invention includes a plurality of teleconferencing terminals, a communication control device for multipoint communications that connects between the plurality of teleconferencing terminals via communication lines, and a receiving terminal that is connected to the teleconferencing terminals via communication lines and accepts a conference request. At the time of holding a conference, each of the teleconferencing terminals establishes a connection to the communication control device via the communication lines to hold a teleconference between the plurality of teleconferencing terminals, and transmits information regarding a conference condition to the communication control device; and in response this transmission, the communication control device sets and changes the conference condition.

According to the present invention, connection errors between the teleconferencing terminals and the communication control device due to a wrong number for a connection destination can be prevented, the utilization of the communication control device can be optimized, and the conference conditions can be set and changed easily with the teleconferencing terminal.

### Brief Description of Drawings

Fig. 1 is a diagram illustrating an embodiment of a teleconferencing system of the present invention;
Fig. 2 is a flowchart showing an example of a procedure for performing a teleconference using the teleconferencing system shown in Fig. 1;
Fig. 3 is a diagram illustrating another embodiment of a teleconferencing system of the present invention; and
Fig. 4 is a flowchart showing an example of a procedure for performing a teleconference using the teleconferencing system shown in Fig. 3.

### Best Mode for Carrying Out the Invention

Hereinafter, embodiments of the teleconferencing system of the present invention will be described.

### [Embodiment 1]

First, Embodiment 1 of the teleconferencing system of the present invention will be described with reference to the accompanying drawings.

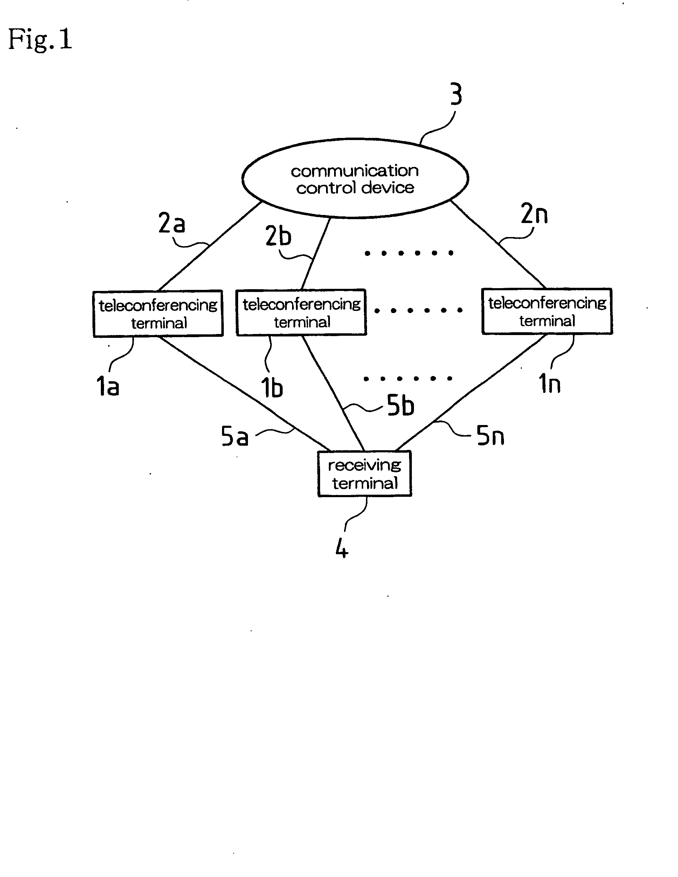

Fig. 1 is a diagram illustrating an embodiment of the teleconferencing system of the present invention.

In this embodiment, the teleconferencing system includes a plurality of teleconferencing terminals 1a, 1b, ... 1n, a communication control device 3 for multipoint communications that connects between the plurality of teleconferencing terminals 1a, 1b, ... 1n via communication lines 2a, 2b, ...2n, and a receiving terminal 4 that is connected to the teleconferencing terminals 1a, 1b, ...1n via communication lines 5a, 5b, ...5n and receives a conference request.

Each of the teleconferencing terminals 1a, 1b, ... 1n is provided with information regarding a first connection destination number (e.g., telephone number) to be used to establish a connection to the receiving terminal 4, and the conference participants who participate in a teleconference with the teleconferencing terminals are provided with an ID number and a password. This information, the ID number and the password may be stored in the memories of the teleconferencing terminals 1a, 1b, ... 1n or may be memorized by the conference participants who use the teleconferencing terminals 1a, 1b, ... 1n, for example, by taking notes.

The teleconferencing terminals 1a, 1b, ... 1n are the same as those of the conventional teleconferencing system, except that memories are provided in all the teleconferencing terminals. The communication lines 2a, 2b, ...2n and 5a, 5b, ...5n and the communication control device 3 for multipoint communications are the same as those of the conventional teleconferencing system, and therefore are not described in detail.

As the receiving terminal 4, for example, a personal computer provided with a modem is used, and information regarding a conference request, and the ID numbers and the passwords of the conference participants are recorded therein in advance at the time of reserving the conference.

Then, a procedure for performing a teleconference using the teleconferencing system shown in Fig. 1 will be described with reference to the accompanying drawings.

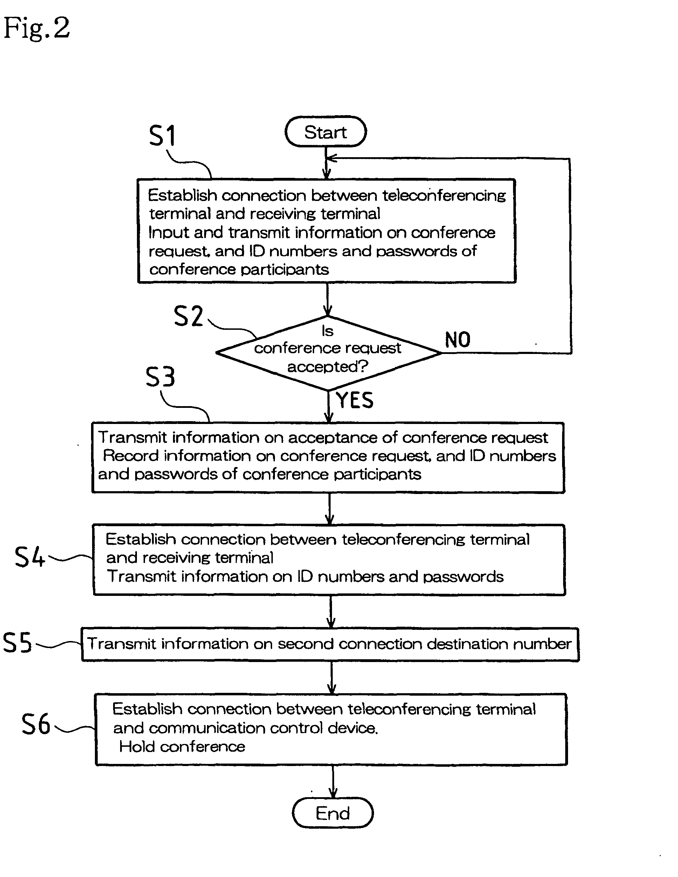

Fig. 2 is a flowchart showing an example of a procedure for performing a teleconference using the teleconferencing system shown in Fig. 1.

First, a reservation of a conference is performed with a teleconferencing terminal. At the time of reserving a conference, using one teleconferencing terminal 1a of the plurality of teleconferencing terminals 1a, 1b, ... 1n, a conference participant establishes a connection to the receiving terminal 4 via the communication line 5a with the first connection destination number, and inputs and transmits information regarding a request for a conference, and the ID numbers and the passwords of the conference participants (S1). An example of the content of the information regarding a request for a conference includes the date and the time of the opening of the conference, the date and the time of the ending of the conference and the number of the teleconferencing terminals that are to participate in the conference, and the like.

The receiving terminal 4 determines whether or not the request for a conference can be accepted by the receiving terminal 4 for reservation of the conference (S2). This determination is performed, for example, by determining whether or not the communication control device has idle lines in the number corresponding to the number of the teleconferencing terminals that are to participate in the conference. Then, when the request for the conference cannot be accepted (when the determination result at a step S2 is NO), a response that the request for a conference cannot be accepted or information regarding this fact is supplied from the receiving terminal 4, and the conference participant of the teleconferencing terminal 1a that has received this information changes the data and the time of the opening of the conference and the like, and then again inputs and transmits information regarding a request for the conference, and the ID numbers and the passwords of the conference participants (S1). On the other hand, when the request for the conference can be accepted (when the determination result at a step S2 is YES), the receiving terminal 4 transmits information regarding the acceptance of the request for the conference and records information regarding the request of the conference, and the ID numbers and the passwords of the conference participants (S3).

The reservation of the conference can be performed by transmission of information between a conference participant and an operator, utilizing a telephone or a facsimile as in the conventional teleconferencing system. In this case, the determination as to whether or not a request for a conference can be accepted, and recording information regarding the request of the conference, and the ID numbers and the passwords of conference participants or the like are performed in response to an input operation to the receiving terminal by an operator.

Then, at the time of accepting the conference request, all the conference participants establish a connection to the receiving terminal 4 via the communication lines 5a, 5b, ...5n with the first connection destination number, using the teleconferencing terminals 1a, 1b, ... 1n of the respective conference participants, and input and transmit information regarding the ID number and the password (S4).

The receiving terminal 4 verifies the transmitted ID numbers and passwords by comparing them with the ID numbers and the passwords that have been recorded at the time of the reservation of the conference, determines a second connection destination number to be used to hold the conference according to the verification results, and transmits the information regarding the second connection destination number to be used to hold the conference to the teleconferencing terminals 1a, 1b, ... 1n (S5). The teleconferencing terminals 1a, 1b, ... 1n record the transmitted information regarding the second connection destination number in the memories. As the second connection destination number, at least one number is assigned, for example, for each conference.

Then, at the time of holding the conference, the conference participants establish a connection to the communication control device 3 via the communication lines 2a, 2b, ...2n with the second connection destination number stored in the memory of each teleconferencing terminal 1a, 1b, ... 1n so as to hold the conference (S6).

The connection to the communication control device 3 with the second connection destination number may be established automatically when the teleconferencing terminals 1a, 1b, ... 1n receive the second connection destination number at the time of accepting the conference request. In this case, the teleconferencing terminals 1a, 1b, ...1n are set in advance such that a connection to the communication control device 3 with the second connection destination number is established the moment the second connection destination number is transmitted from the receiving terminal 4.

According to the teleconferencing system of this embodiment, the second connection destination number transmitted from the receiving terminal to each teleconferencing terminal has been stored in the memory of the teleconferencing terminal, so that it is not necessary that the conference participants input the second connection destination number with a keyboard or the like in order to establish a connection to the communication control device with the second connection destination number. Therefore, connection errors between the teleconferencing terminals and the communication control device due to a wrong second connection destination number can be prevented.

Furthermore, since a second connection destination number is assigned to each conference at the time of accepting a conference request, assignment of conferences to communication control devices can be changed every time a reservation is made, before the conference request is accepted. Consequently, the communication control device can be utilized to the optimal extent. More specifically, for example, when one communication control device can control communications for 100 lines, that is, can be connected to 100 teleconferencing terminals, assignment of the communication control devices to conferences can be performed as follows: It is assumed that a conference using 50 teleconferencing terminals, a conference using 45 teleconferencing terminals, a conference using 30 teleconferencing terminals, a conference using 20 teleconferencing terminals, and a conference using 55 teleconferencing terminals are requested sequentially in this order. With respect to these requests, the receiving terminal assigns the conferences to the communication control devices in such a manner that the number of idle lines is reduced every time a new reservation for a conference is made before the conference request is accepted. For example, the conference using 50 teleconferencing terminals, the conference using 30 teleconferencing terminals and the conference using 20 teleconferencing terminals are assigned to a first communication control device. The conference using 45 teleconferencing terminals and the conference using 55 teleconferencing terminals are assigned to a second communication control device. This means that there are no idle lines either in the first or the second communication control device, and a new conference request can be accepted in the third communication control device. Thus, the communication control devices can be used efficiently.

### [Embodiment 2]

Next, Embodiment 2 of the teleconferencing system of the present invention will be described with reference to the accompanying drawings.

The teleconferencing system of this embodiment is different from the above-described teleconferencing system (Embodiment 1) only in that the conference conditions of the communication control device are set with the receiving terminal, and other aspects are the same as above.

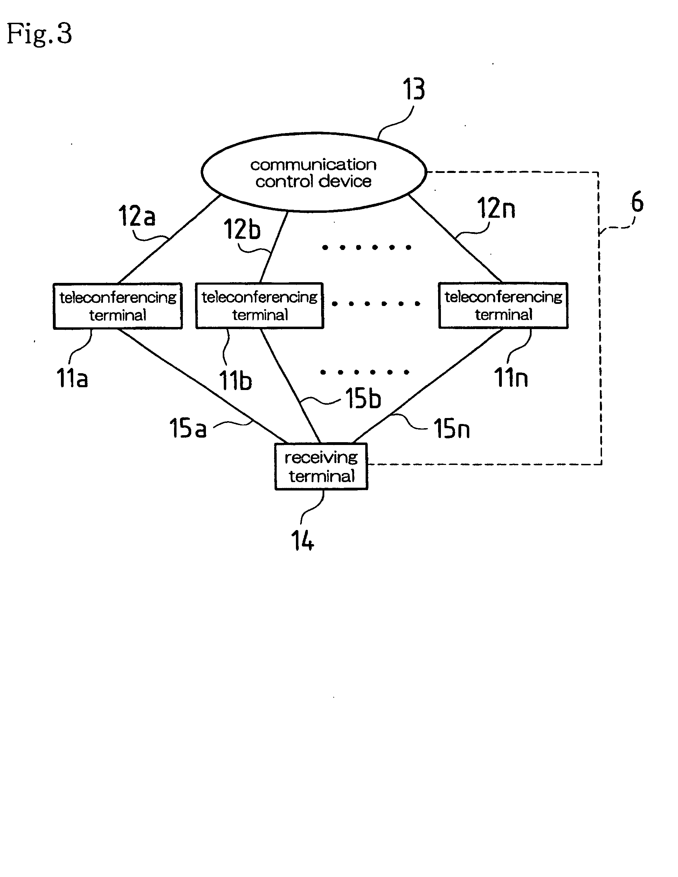

Fig. 3 is a diagram illustrating another embodiment of the teleconferencing system of the present invention. In this embodiment, the teleconferencing system includes a plurality of teleconferencing terminals 11a, 11b, ... 11n, a communication control device 13 for multipoint communications that connects between the plurality of teleconferencing terminals 11a, 11b, ...11n via communication lines 12a, 12b, ...12n, and a receiving terminal 14 that is connected to the teleconferencing terminals 11a, 11b, ... 11n via communication lines 15a, 15b, ...15n and accepts a conference request and performs the setting of the conference conditions.

Each of the teleconferencing terminals 11a, 11b, ... 11n is provided with information regarding a first connection destination number (e.g., telephone number) to be used to establish a connection to the receiving terminal 14, and the conference participants who participate in a teleconference with the teleconferencing terminals are provided with an ID number and a password. This information, the ID number and the password may be stored in the memories of the teleconferencing terminals 11a, 11b, ... 11n or may be memorized by the conference participants who use the teleconferencing terminals 11a, 11b, ...11n, for example, by taking notes.

The teleconferencing terminals 11a, 11b, ...11n are the same as those of the conventional teleconferencing system, except that memories are provided in all the teleconferencing terminals. The communication lines 12a, 12b, ... 12n and 15a, 15b, ... 15n and the communication control device 13 for multipoint communications are the same as those of the conventional teleconferencing system, and therefore are not described in detail.

As the receiving terminal 14, for example, a personal computer provided with a modem is used, and information regarding a conference request, the conference conditions, and the ID numbers and the passwords of the conference participants is recorded therein in advance at the time of reserving the conference.

Then, the procedure for performing a teleconference using the teleconferencing system shown in Fig. 3 will be described with reference to the accompanying drawings.

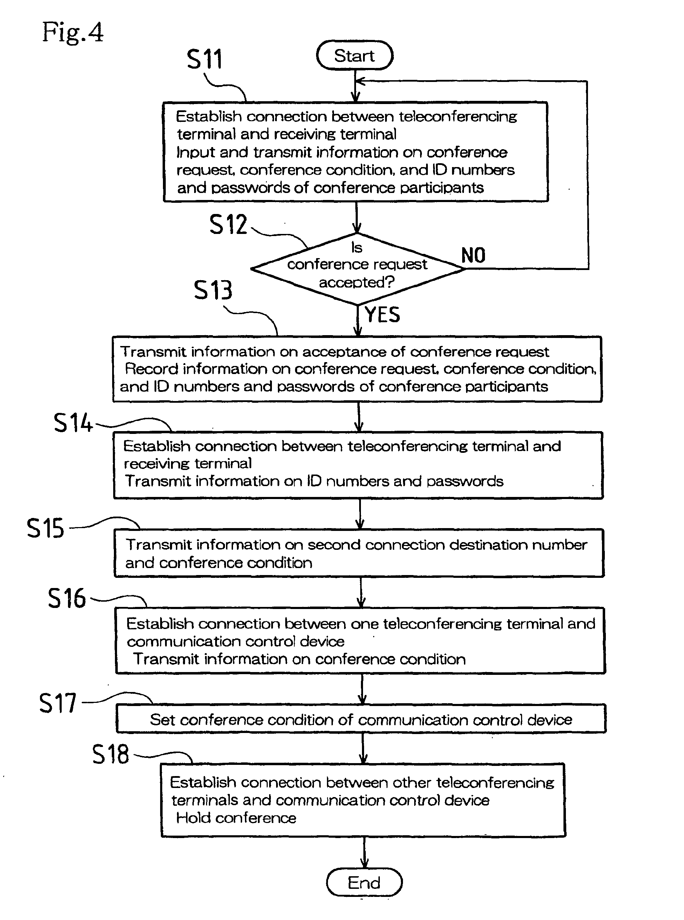

Fig. 4 is a flowchart showing an example of a procedure for performing a teleconference using the teleconferencing system shown in Fig. 3.

First, a reservation of a conference is made with a teleconferencing terminal. At the time of making a conference request, using one teleconferencing terminal 11a of the plurality of teleconferencing terminals 11a, 11b, ...11n, a conference participant establishes a connection to the receiving terminal 14 via the communication line 15a with the first connection destination number, and inputs and transmits information regarding a request for a conference, the conference conditions and the ID numbers and the passwords of the conference participants (S11).

The receiving terminal 14 determines whether or not the request for a conference can be accepted by the receiving terminal 14 for reservation of the conference (S12). This determination is performed, for example, by determining whether or not the communication control device has idle lines in the number corresponding to the number of the teleconferencing terminals that are to participate in the conference. Then, when the request for the conference cannot be accepted (when the determination result at a step S12 is NO), a response that the request for a conference cannot be accepted or information regarding this fact is supplied from the receiving terminal 14, and the conference participant of the teleconferencing terminal 11a that has received this information changes the data and the time of the opening of the conference and the like, and then again and inputs and transmits information regarding a request for the conference, the conference conditions, and the ID numbers and the passwords of the conference participants (S11). On the other hand, when the request for the conference can be accepted (when the determination result at a step S12 is YES), the receiving terminal 14 transmits information regarding the acceptance of the request for the conference and records information regarding the request of the conference, the conference conditions, and the ID numbers and the passwords of the conference participants (S13).

The reservation of the conference can be performed by transmission of information between a conference participant and an operator, utilizing a telephone or a facsimile as in the conventional teleconferencing system. In this case, the determination as to whether or not a request for a conference can be accepted, or recording information regarding the request of the conference, the conference conditions, and the ID numbers and the passwords of conference participants or the like is performed in response to an input operation to the receiving terminal by the operator. Then, at the time of accepting the conference request, all the conference participants establish a connection to the receiving terminal 14 via the communication lines with the first connection destination number, using the teleconferencing terminals 11a, 11b, ... 11n of the respective conference participants, and input and transmit information regarding the ID number and the password (S14).

The receiving terminal 14 verifies the transmitted ID numbers and passwords by comparing them with the ID numbers and the passwords that have been recorded at the time of the reservation of the conference, determines a second connection destination number to be used to hold the conference according to the verification results, and transmits the information regarding the second connection destination number to be used to hold the conference and the information regarding the conference conditions recorded at the time of the conference reservation to one teleconferencing terminal 11a of the teleconferencing terminals 11a, 11b, ...11n, and transmits the information regarding the second connection destination number to be used to hold the conference to the other teleconferencing terminals 11b, ... 11n (S15). The teleconferencing terminal 11a of the teleconferencing terminals 11a, 11b, ... 11n records the transmitted information regarding the second connection destination number and the conference conditions, and the other teleconferencing terminals 11b, ...11n record the transmitted information regarding the second connection destination number.

Then, at the time of holding the conference, one of all the conference participants uses one teleconferencing terminal 11a (which may be different from the one used to make a conference request) of the plurality of teleconferencing terminals 11a, 11b, ... 11n to establish a connection to the communication control device 13 via the communication line 12a with the second connection destination number stored in the memory of the teleconferencing terminal 11a and transmits the information regarding the conference conditions stored in the memory (S16). The information regarding the conference conditions may be transmitted automatically during the course of establishing the connection to the communication control device 13 or after the connection to the communication control device 13 is established.

Then, the communication control device 13 performs the setting of the conference conditions based on the information regarding the conference conditions in response to the transmission of the information regarding the conference conditions (S17). During the setting of the conference conditions as well, the teleconferencing terminal 11a and the communication control device 13 is in the state of being connected each other, and this state is maintained until the conference ends. Examples of the information regarding the conference conditions include selection of an audio/video mode (audio off (video only), standard, audio priority 1, audio priority 2 or video priority), selection of an image mode (image priority or video motion priority), selection of a conference mode (single video use and switching of only audio, presentation, broadcast, or screen division into four), selection of a network type (communication speed: 64 kbit/s, 2 x 64 bit/s, 384 bit/s, 56 bit/s, 2 x 56 bit/s, or 336 bit/s), setting of a time at which a conference opening sign (chime) is supplied, selection of the kind (tone) of the opening sign, setting of a time at which a conference ending sign (chime) is supplied, selection of the kind (tone) of the ending sign, and setting of a period of time before the connection of the communication lines between the teleconferencing terminals 1a, 1b, ... In and the communication control device is shut down (a period of time from when the ending sign is supplied until the communication line is shut down) or the like.

Furthermore, the other conference participants establish a connection to the communication control device 13 via the communication lines 12b, ...12n with the second connection destination number stored in the memory of each of the teleconferencing terminals 11b, ...11n, and a conference is held among all the teleconferencing terminals 11a, 11b, ... 11n (S18).

The connection to the communication control device 3 with the second connection destination number may be established automatically when the teleconferencing terminals 1a, 1b, ... 1n receive the second connection destination number at the time of accepting the conference request. In this case, the teleconferencing terminals 1a, 1b, ... 1n are set in advance such that a connection to the communication control device 3 with the second connection destination number is established the moment the second connection destination number is transmitted from the receiving terminal 4.

In the embodiment described with reference to Fig. 3 and 4, the conference conditions are transmitted from the receiving terminal to the communication control device via the teleconferencing terminal 1a to set the conference conditions of the communication control device. However, the procedure for transmitting the conference conditions to the communication control device is not limited thereto.

For example, when one teleconferencing terminal is connected to the receiving terminal and transmits information regarding the ID numbers and the passwords of the conference participants at the time of accepting a conference request, the receiving terminal can verify the ID numbers and the passwords in response to this transmission, and at the same time, the establishment of the connection to the communication control device and the transmission of the information regarding the recorded conference conditions to the communication control device may be performed. In this case, the communication control device performs the setting of the conference conditions in response to the transmission of the information regarding the conference conditions, and transmits the information regarding the setting completion to the receiving terminal after the setting is completed. Then, the receiving terminal transmits the information regarding the second connection destination number to the teleconferencing terminal when the information regarding the setting completion is received.

When the conference conditions are transmitted directly from the receiving terminal to the communication control device in this manner, it is necessary to add a communication line (shown by reference numeral 6 in Fig. 3) for connecting between the receiving terminal and the communication control device.

According to the teleconferencing system of this embodiment, the same effect can be obtained as that of the above-described teleconferencing system, and the conference conditions can be set by the receiving terminal at the time of holding the conference.

### [Embodiment 3]

Next, Embodiment 3 of the teleconferencing system of the present invention will be described with reference to the accompanying drawings.

The teleconferencing system of this embodiment is characterized by setting and changing the conference conditions of a communication control device by using a teleconferencing terminal at the time of holding the conference.

The structure of this teleconferencing system is the same as the teleconferencing system shown in Fig. 1, and is not described in detail in this embodiment.

Furthermore, the procedure regarding reservation of a conference and acceptance of a conference request before the conference is held may be the same as that of the conventional teleconferencing system or that of the teleconferencing system of Embodiment 1 or 2.

At the time of holding the conference, each of the teleconferencing terminals 1a, 1b, ... 1n establishes a connection to the communication control device 3 via the communication lines to hold a teleconference between the plurality of teleconferencing terminals, and if necessary, transmit information regarding the conference conditions to the communication control device. For example, when the conference conditions of the communication control device have not been set, the communication control device performs the setting of the conference conditions based on the transmitted information regarding the conference conditions. Furthermore, when the conference conditions of the communication control device already have been set, the communication control device changes the conference conditions based on the transmitted information regarding the conference conditions. It should be noted that when the conference conditions of the communication control device are set or changed in this manner, it is necessary to set the communication control device to be constantly capable of setting or changing the communication conditions based on new information regarding the conference conditions transmitted during the conference.

According to the teleconferencing system of this embodiment, the same effect can be obtained as that of the above-described teleconferencing system, and the conference conditions can be set and changed by the receiving terminal at the time of holding the conference, so that the conference conditions can be changed any time.

### Industrial Applicability

As described above, the teleconferencing system of the present invention is suitable for use in a teleconference.

## Claims

1. A teleconferencing system comprising a plurality of teleconferencing terminals, a communication control device for multipoint communications that connects between the plurality of teleconferencing terminals via communication lines, and a receiving terminal that is connected to the teleconferencing terminals via communication lines and accepts a conference request,
wherein each of the teleconferencing terminals is provided with information regarding a first connection destination number to be used to establish a connection to the receiving terminal, and conference participants who participate in a teleconference with the teleconferencing terminals are provided with respective ID numbers and passwords,
information regarding a conference request, and the respective ID numbers and passwords of the plurality of conference participants who participate in the conference are recorded in the receiving terminal at a time of reserving a conference,
at a time of accepting a conference request, each teleconferencing terminal establishes a connection to the receiving terminal via the communication line with the first connection destination number and transmits information regarding the ID numbers and the passwords of the conference participants input by the conference participants; the receiving terminal verifies the transmitted ID numbers and passwords by comparing them with the ID numbers and the passwords that are recorded at the time of reserving the conference, determines a second connection destination number to be used to hold a conference according to the verification results, and transmits information regarding the second connection destination number; the teleconferencing terminals record the transmitted information regarding the second connection destination number, and
at a time of holding the conference, each teleconferencing terminal establishes a connection to the communication control device via the communication line with the second connection destination number.

2. A teleconferencing system comprising a plurality of teleconferencing terminals, a communication control device for multipoint communications that connects between the plurality of teleconferencing terminals via communication lines, and a receiving terminal that is connected to the teleconferencing terminals via communication lines and accepts a conference request,
wherein each of the teleconferencing terminals is provided with information regarding a first connection destination number to be used to establish a connection to the receiving terminal, and conference participants who participate in a teleconference with the teleconferencing terminals are provided with respective ID numbers and passwords,
information regarding a conference request, a conference condition, and the respective ID numbers and passwords of the plurality of conference participants who participate in the conference are recorded in the receiving terminal at a time of reserving a conference,
at a time of accepting a conference request, each teleconferencing terminal establishes a connection to the receiving terminal via the communication line with the first connection destination number and transmits information regarding the ID numbers and the passwords of the conference participants input by the conference participants; the receiving terminal verifies the transmitted ID numbers and passwords by comparing them with the ID numbers and the passwords that are recorded at the time of reserving the conference, determines a second connection destination number to be used to hold a conference according to the verification results, and transmits information regarding the second connection destination number; the teleconferencing terminals record the transmitted information regarding the second connection destination number, and
at a time of holding the conference, each teleconferencing terminal establishes a connection to the communication control device via the communication lines with the second connection destination number.

3. The teleconferencing system according to claim 2, wherein
at the time of accepting the conference, the receiving terminal transmits information regarding the second connection destination number and information regarding the recorded conference condition to at least one of the plurality of teleconferencing terminals that particulate in a same conference; the one teleconferencing terminal records the transmitted information regarding the second connection destination number and the information regarding the conference condition; at the time of holding the conference, the one teleconferencing terminal establishes a connection to the communication via the communication line with the second connection destination number and transmits the information regarding the conference condition to the communication control device; and in response to this transmission, the communication control device sets the conference condition.

4. The teleconferencing system according to claim 2, wherein
at the time of accepting the conference, the receiving terminal verifies the transmitted ID numbers and passwords by comparing them with the ID numbers and the passwords that are recorded at the time of reserving the conference, establishes a connection to the communication control device and transmits information regarding the recorded conference condition to the communication control device; in response to this transmission, the communication control device sets the conference condition, and then transmits information regarding setting completion to the receiving terminal; and in response to this transmission, the receiving terminal transmits information regarding the second connection destination number to the teleconference terminals.

5. A teleconferencing system comprising a plurality of teleconferencing terminals, a communication control device for multipoint communications that connects between the plurality of teleconferencing terminals via communication lines, and a receiving terminal that is connected to the teleconferencing terminals via communication lines and accepts a conference request,
wherein at a time of holding a conference, each of the teleconferencing terminals establishes a connection to the communication control device via the communication lines to hold a teleconference between the plurality of teleconferencing terminals, and transmits information regarding a conference condition to the communication control device; and in response this transmission, the communication control device sets and changes the conference condition.
